# EUROPÄISCHE PATENTSCHRIFT

(11) **EP 2 240 346 B1**
(45) Veröffentlichungstag und Bekanntmachung des Hinweises auf die Patenterteilung: **12.10.2016**
(21) Anmeldenummer: 09711413.6
(22) Anmeldetag: 22.01.2009
(51) Int. Cl.: B60R 21/0132

(54) **VERFAHREN UND STEUERGERÄT ZUR ANSTEUERUNG VON PERSONENSCHUTZMITTELN FÜR EIN FAHRZEUG**
METHOD AND CONTROL DEVICE FOR CONTROLLING PERSONAL PROTECTION MEANS FOR A VEHICLE
PROCÉDÉ ET APPAREIL DE COMMANDE POUR COMMANDER DES MOYENS DE PROTECTION PERSONNELLE POUR UN VÉHICULE

(30) Priorität: 13.02.2008 DE 102008008850
(43) Veröffentlichungstag der Anmeldung: 20.10.2010
(73) Patentinhaber: Robert Bosch GmbH, 70442 Stuttgart (DE)
(72) Erfinder: KAERNER, Christof, 73095 Albershausen (DE); KOLATSCHEK, Josef, 71263 Weilder Stadt (DE)
(86) Internationale Anmeldenummer: PCT/EP2009/050718
(87) Internationale Veröffentlichungsnummer: WO 2009/100973

(56) Entgegenhaltungen:
- EP-A- 1 747 945
- WO-A-2008/031747
- DE-A1- 10 227 003
- DE-A1- 19 848 997
- DE-A1-102004 016 265
- US-A1- 2006 255 575

## Beschreibung

### Stand der Technik

Die Erfindung betrifft ein Verfahren bzw. ein Steuergerät zur Ansteuerung von Personenschutzmitteln nach der Gattung der unabhängigen Patentansprüche.

Aus DE 10 2005 035 415 A1 ist es bereits bekannt, eine Ansteuerung von Personenschutzmitteln in Abhängigkeit von einer Unterscheidung eines sogenannten AZT- und eines ODB-Crashes durchzuführen. Diese Crashtypen sind in der angegebenen Schrift definiert. Die Unterscheidung wird durch eine Auswertung von Beschleunigungssignalen und Umfeldsignalen vorgenommen. Als Beschleunigungssignale können Zentralsignale, aber auch Signale von in der Fahrzeugseite angeordneten Beschleunigungssensoren verwendet werden.

Die in der folgenden Beschreibung verwendeten Abkürzungen für die beiden Tests bezeichnen:
(i) AZT = Allianz-Zentrum-für-Technik-Crashtest; ein derartiger Crashtest bezeichnet einen Crash mit einer relativ niedrigen Geschwindigkeit des Fahrzeugs auf eine relativ harte Barriere; bei diesem Test dürfen irreversible Rückhaltemittel, d.h. Airbags oder irreversible, d.h. pyrotechnische Gurtstraffer, etc. nicht auslösen; reversible Rückhaltemittel wie beispielsweise Crash-aktive Kopfstützen, reversible Gurtstraffer, etc. dürfen bei einem derartigen AZT-Test auslösen; und
(ii) ODB-Test = Offset-Deformable-Barrier-Crashtest; bei diesem Test handelt es sich um einen Aufprall bzw. eine Berührung des Fahrzeugs mit einem Objekt, wobei das Fahrzeug eine relativ hohe Geschwindigkeit aufweist und das Objekt bzw. die Barriere relativ weich ist; gemäß Spezifikationen muss bei einem derartigen ODB-Test sichergestellt sein, dass alle der Situation angepassten Rückhaltemittel auslösen bzw. gezündet werden.

Die Druckschrift EP 1 747 945 A1 offenbart ein Verfahren zum Bestimmen eines Crashtyps bei einem Fahrzeugcrash mit Rückhaltemitteln ausgestatteten Fahrzeugs, bei dem ein Beschleunigungssignal mittels eines Aufprallsensors erfasst wird, ein Erkennungssignal mittels eines vorausschauenden Sensors erfasst wird und das Beschleunigungssignal mit dem Erkennungssignal mittels einer Recheneinheit verknüpft wird. In Abhängigkeit von der Verknüpfung wird ein Auslöseentscheidungssignal zu einer Ansteuereinheit ausgegeben, wobei die Rückhaltemittel in Abhängigkeit von dem Auslöseentscheidungssignal angesteuert werden.

Die gattungsbildende DE 102004016265 A1 offenbart ein Verfahren zum Unterscheiden von Aufprallarten für die Ansteuerung eines Rückhaltesystems eines Fahrzeugs mit einem ersten Sensor als Referenzsensor und mindestens einem zweiten Sensor in einem Deformationsbereich des Fahrzeugs, wobei die Sensoren jeweils ein Beschleunigungssignal liefern, mit den Verfahrensschritten: Starten eines Zeitfensters in einem ersten Zeitpunkt; Beobachten des ersten Beschleunigungssignals des ersten Sensors und des zweiten Beschleunigungssignals des zweiten Sensors in diesem Zeitfenster; Speichern von Werten jeweils des ersten Beschleunigungssignals und des zweiten Beschleunigungssignals in diesem Zeitfenster; Beenden des Zeitfensters in einem zweiten Zeitpunkt; Bearbeiten der gespeicherten Werte und Unterscheiden der Aufprallart durch Vergleichen der bearbeiteten gespeicherten Werte mit mindestens einem vorgebbaren Schwellwert; sowie eine Steuervorrichtung mit diesem Verfahren.

Die DE 102 27 003 A1 offenbart ein Verfahren zur Ansteuerung eines Rückhaltesystems vorgeschlagen, das sich dadurch auszeichnet, dass die Schwellwertberechnung, die mittels des Beschleunigungssignals durchgeführt wird, durch einen Zuschlag angepasst wird, der sich aus Signaleigenschaften des Beschleunigungs- und des Geschwindigkeitssignals bestimmt. Zusätzlich können noch Signale von einem Upfronsensor berücksichtigt werden.

Die US 2006/0255575 A1 offenbart ein Verfahren und eine Vorrichtung zur Steuerung eines aktuierbaren Rückhaltesystems durch Verwenden eines x-,y-Satelliten-Beschleunigungssensors.

Die DE 19848997 A1 offenbart eine Crashart-Bestimmungseinheit umfasst erste und zweite Beschleunigungssensoren, die an beiden Seiten eines Fahrzeugs angeordnet sind, und einen dritten Beschleunigungssensor, der nahe des Zentrums des Fahrzeugs angeordnet ist. Eine relative Linienintegrationslange eines der integrierten Ausgangssignale der durch die ersten und zweiten Beschleunigungssensoren detektierten Beschleunigungen wird mit Bezug auf das integrierte Ausgangssignal der durch den dritten Beschleunigungssensor detektierten Beschleunigung berechnet. Die relative Linienintegrationslänge des integrierten Ausgangssignals wird lang, wenn die Crashart entweder ein Pfosten-Crash oder ein Unterfahr-Crash ist. Daher kann die Crashart des PfostenCrashs oder des Unterfahr-Crashs durch Vergleichen der relativen Linienintegrationslänge mit einer vorbestimmten Länge bestimmt werden.

### Offenbarung der Erfindung

Das erfindungsgemäße Verfahren bzw. das erfindungsgemäße Steuergerät zur Ansteuerung von Personenschutzmitteln mit den Merkmalen der unabhängigen Patentansprüche haben demgegenüber den Vorteil, dass eine einfachere, aber zuverlässige Unterscheidung von Crashtypen, insbesondere des AZT- und des ODB-Crashtest möglich sind. Dies wird dadurch erreicht, dass die Crashtyperkennung in Abhängigkeit von einem Signal einer zentral angordneten Beschleunigungssensorik und einer in der Fahrzeugseite und in Fahrzeugquerrichtung empfindlichen Beschleunigungssensorik bestimmt wird. Insbesondere ist die Erfindung damit geeignet, unterschiedliche Frontcrashtypen zu unterscheiden. Dies ermöglicht den Verzicht auf sogenannte Upfrontsensoren. Das sind Sensoren, die in der Fahrzeugfront eingebaut sind.

Folgende Überlegungen liegen der Erfindung zugrunde:
Obwohl sich typische Unfallsituationen mit Offsetbarrieren und Winkelbarrieren hinsichtlich Crashschwere, Crashgeschwindigkeit und Barriereneigenschafen deutlich unterscheiden, sind die Signale, die in einem Sensor aufgezeichnet werden, in Amplitude und Verlauf in den ersten beispielsweise 30 ms sehr ähnlich. Der Crashbeginn wird beispielsweise durch das Überschreiten einer Rauschschwelle erkannt. Ursache hierfür, d. h. für die Ähnlichkeit dieser Signale, ist der sehr indirekte Übertragungsweg zwischen Aufprallort und Sensorposition, der über Längsträger, Schottwände und über das Bodenblech des Fahrzeugs verläuft. Alle diese, in ihrer Struktur sehr verschiedenen Komponenten wirken auf das Signal ein, verändern es und prägen zusätzlich einen Teil ihrer lokalen Eigenschaften dem Signal auf. Beispielsweise werden die Lokalschwingungseigenschaften von bestimmten Bauteilen dem Signal aufgeprägt. Da die Hauptkrafteinleitung bei den angesprochenen Kollisionstypen (AZT, ODB) zudem an einem Ort erfolgt, der einen gewissen Abstand zur Mittelachse des Fahrzeugs hat, auf welche der Fahrsensor sitzt, wird zudem nur ein Teil des Kraftpfades in Richtung des Sensoreinbauortes. All diese Gegebenheiten führen dazu, dass die ursprünglichen Signale, die am Ort des Aufpralls durchaus erkennbar unterschiedlich sind, über diesen Übertragungsweg hinweg in Richtung zum Zentralsensor sich immer weiter in ihren Eigenschaften annähern. Am Ende sind die Signale so ähnlich, dass sie sich nur noch unter Schwierigkeiten unterscheiden lassen. Die Lösung für das Unterscheidungsproblem liegt erfindungsgemäß darin, einen weiteren Übertragungsweg zu verwenden, der die Signale dieser Kollisionstypen nicht so in großem Maße verändert. Bei Betrachtung des typischen Aufbaus einer Fahrzeugkarosserie kann man erkennen, dass die Seitenstruktur mit ihrer in Längsstruktur verlaufenden Schwellerstruktur eine sehr direkte Verbindung an die Längsträger und Crashboxstruktur im Fahrzeugvorbau darstellt. Alle diese Elemente verlaufen in Fahrzeuglängsrichtung und annähernd in einer Linie. Eine so starke Signalumleitung, wie im Falle des Zentralsensors (Längsträger-Fahrzeugtrennwand-Tunnel) findet nicht statt. Da ein Seitenaufprallbeschleunigungssensor, der sich im Schweller oder unten am Fuß der B-Säule befindet, ebenso sehr direkt an diese Struktur angebunden ist, liegt dem erfindungsgemäßen Verfahren und Steuergerät die Verwendung dieser Sensorsignale zugrunde. Der Nachteil, dass diese Sensierrichtung dieses Seitenaufprallsensors im Allgemeinen nur in Fahrzeugquerrichtung besteht, ändert nichts an der Verwertbarkeit der Signale. Falls die Signale in Fahrzeuglängs- oder Vertikalrichtung zur Verfügung stehen, können diese ebenso nach dem erfindungsgemäßen Verfahren verwendet werden.

Zu beachten ist, dass bei einem AZT-Crash eine Ansteuerung der Personenschutzmittel unterbleibt, während bei dem ODB-Crash eine solche Ansteuerung erfolgen muss.

Vorliegend ist ein Steuergerät ein elektrisches Gerät, das Sensorsignale verarbeitet und in Abhängigkeit davon Steuersignale, beispielsweise Ansteuerung der Personenschutzmittel erzeugt. Die Ansteuerung der Personenschutzmittel bedeutet deren Aktivierung. Bei den Personenschutzmitteln handelt es sich beispielsweise um Airbags, Gurtstraffer und crashaktive Kopfstützen. Aber auch andere bekannte Personenschutzmittel können hierunter verstanden werden.

Bei den Schnittstellen kann es sich um hardware- oder softwaremäßige Lösungen handeln. Insbesondere können bei einer hardwaremäßigen Ausführung dieser Schnittstellen als Teil eines Systembausteins ausgebildet sein. Aber auch alle anderen hardwaremäßigen Lösungen sind vorliegend darstellbar. Bei einer softwaremäßigen Ausprägung kann die Schnittstelle insbesondere auf einem Prozessor, wie einem Mikrocontroller, als Softwareschnittstelle vorhanden sein.

Die zentral angeordnete erste Beschleunigungssensorik ist zentral im Fahrzeug angeordnet und dabei beispielsweise im Steuergerät selbst angeordnet oder in einem gesonderten Steuergerät für Sensoren oder einfach einer Sensorbox. Auch andere Einbauweisen für die zentral angeordnete Beschleunigungssensorik sind möglich. Die zweite Beschleunigungssensorik ist im Seitenbereich des Fahrzeugs angeordnet. Dies bedeutet, dass die beispielsweise wie oben angegeben am Fuße der B-Säule oder auch an anderen Orten der B-Säule angeordnet sein kann oder im Sitzwerkträger oder am Türschweller oder im Bereich der A- oder C-Säule. Auch in einem Seitenteil eines Fahrzeugs in der Türe kann der Beschleunigungssensor angeordnet sein. Üblicherweise ist die zweite Beschleunigungssensorik im Wesentlichen in Fahrzeugquerrichtung empfindlich und die erste Beschleunigungssensorik in Fahrzeuglängsrichtung. Bei der Beschleunigungssensorik handelt es sich üblicherweise um mikromechanisch vorzugsweise mit Oberflächenmikromechanik hergestellten Sensorelementen, die bereits eine Sensorvorverarbeitung aufweisen und entsprechende Kommunikationsbausteine um die Sensorsignale zum Steuergerät zu übertragen.

Bei der Auswerteschaltung handelt es sich üblicherweise um einen Prozessor, beispielsweise einen Mikrocontroller. Aber auch andere Prozessortypen, insbesondere auch Mehrkernprozessoren sind vorliegend möglich. Daneben sind auch Auswerteschaltungen möglich, die keine Software verwenden, aber dies mit speziell entwickelter Hardware durchführen, beispielsweise als ein integrierter Schaltkreis. Auch zumindest teilweise diskrete Lösungen sind vorliegend möglich.

Entsprechend sind das Bestimmungsmodul und das Ansteuerungsmodul ausgeführt.

Die Ansteuerschaltung kann ebenfalls Teil des bereits angesprochenen Sytem-ASICs sein. Sie kann jedoch auch getrennt davon ausgeführt sein.

Bei dem ersten und zweiten Signal kann es sich um alle möglichen Arten von Signalen handeln, insbesondere auch um einen Multiplex von mehreren Signalen.

Das Bestimmen des Crashtyps erfolgt in Abhängigkeit vom ersten und vom zweiten Signal, wobei das Bestimmen durch alle möglichen Auswerteverfahren des ersten und zweiten Signals erfolgen kann. Insbesondere können abgeleitete Signale von dem ersten und dem zweiten Signal verwendet werden, wobei diese Ableitung beispielsweise im Integrieren, Differenzieren oder anderen mathematischen Veränderungen bestehen kann. Auch Filtern gehört hierzu.

Für die Ansteuerung von Personenschutzmitteln ist die Bestimmung des Crashtyps wesentlich. Daher vermag das Ansteuerungsmodul in Abhängigkeit von diesem bestimmten Crashtyp die Ansteuerung durchzuführen.

Durch die in den abhängigen Ansprüchen aufgeführten Maßnahmen und Weiterbildungen sind vorteilhafte Verbesserungen des in den unabhängigen Patentansprüchen angegebenen Verfahrens bzw. Steuergeräts zur Ansteuerung von Personenschutzmitteln für ein Fahrzeug möglich.

Es ist dabei vorteilhaft, dass das zweite Signal ein Wechselanteil eines Messsignals der zweiten Beschleunigungssensorik ist. Es hat sich gezeigt, dass der Wechselanteil einer solchen Beschleunigungssensorik, die üblicherweise zur Seitenaufprallerkennung gedacht ist, wichtige Informationen über den Crash beinhaltet. Insbesondere ist die Dynamik des Crashs dort besonders gut enthalten. Der Wechselanteil kann durch Eliminierung des Gleichanteils ermittelt werden, beispielsweise durch einen Hochpass.

Es ist weiterhin vorteilhaft, dass dabei dann eine Amplitude des Wechselanteils bzw. ein Betrag dieser Amplitude verwendet wird, wobei dann in Abhängigkeit von einem Schwellwertvergleich mit dieser Amplitude oder dem entsprechenden Betrag zwischen einem ODB- und einem AZT-Crashtyp unterschieden wird. Dies ermöglicht eine sehr einfache Unterscheidung dieser Crashtypen. Anstatt des Betrags kann auch eine Potenz der Amplitude verwendet werden. Die Schwelle kann dabei insbesondere dynamisch bzw. adaptiv in Abhängigkeit von dem Signal der Zentralsensorik verwendet werden. Damit kann, wenn das Zentralsignal eine entsprechende Situation anzeigt, eine Schärferschaltung der Schwelle erfolgen. Beispielhaft ist, dass wenn die Amplitude der Seitenaufprallsensorik, die in Seitenrichtung empfindlich ist, eine bestimmte Schwelle überschreitet, wird die Kollision eher vom Crashtyp eines ODB sein und wenn die Schwelle unterschritten wird, dann spricht vieles für einen AZT-Crash. Es kann sein, dass das Merkmal der Zeit für die Auswertung verwendet wird, indem nur bis zu einer bestimmten Zeit das zweite Signal ausgewertet wird. Vorteilhafter Weise kann ein Betrag oder eine Potenz der Amplitude für den Schwellwertvergleich verwendet werden.

Es ist vorteilhafter Weise so, dass die Schwelle adaptiv ausgeführt sein kann, beispielsweise könnte in Abhängigkeit von der Zeit oder dem Signal der ersten Beschleunigungssensorik verändert werden.

Es ist weiterhin von Vorteil, dass der bestimmte Crashtyp als eine Eingangsgröße in ein Ansteuerungsalgorithmus eingeht, wobei in den Ansteuerungsalgorithmus noch weitere Crashgrößen eingehen, um die Ansteuerung zu entscheiden. Dies bedeutet, dass das erfindungsgemäße Verfahren eine Funktion ist, die der Ansteuerungsalgorithmus verwendet, um beispielsweise seine Ansteuerungsschwelle zu verändern. D. h. der Crashtyp, beispielsweise AZT oder ODB verändert in vorbestimmter Weise die Schwelle in diesen Ansteuerungsalgorithmus. Dies kann aditiv als ein sogenanntes "add on" oder auch multiplikativ geschehen.

Es ist weiterhin von Vorteil, dass das zweite Signal ein tieffrequenter Anteil des Messsignals der zweiten Beschleunigungssensorik ist. Dies kann beispielsweise durch eine Filterung, beispielsweise eine Tiefpassfilterung, oder auch eine Integration des Messsignals geschehen. Ob der Wechselanteil oder der tieffrequente Anteil verwendet wird, richtet sich nach den Gegebenheiten der Fahrzeugkarosserie.

Ausführungsbeispiele der Erfindung sind in der Zeichnung dargestellt und werden in der nachfolgenden Beschreibung näher erläutert.

Es zeigen
Figur 1 ein Blockschaltbild des erfindungsgemäßen Steuergeräts mit angeschlossenen Komponenten,
Figur 2 ein erstes Flussdiagramm des erfindungsgemäßen Verfahrens und
Figur 3 ein zweites Flussdiagramm des erfindungsgemäßen Verfahrens.

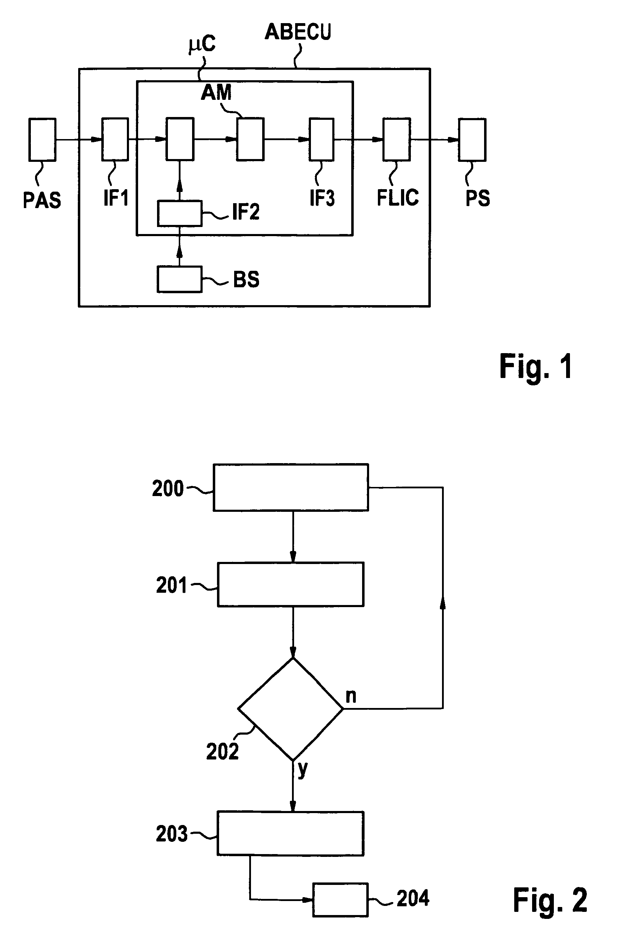

Figur 1 zeigt in einem Blockschaltbild das erfindungsgemäße Steuergerät ABECU als ein sogenanntes Airbagsteuergerät, das Personenschutzmittel PS ansteuert. Beispielhaft sind an das Airbagsteuergerät ABECU lediglich die Seitenaufprallsensorik PAS angeschlossen, also eine Beschleunigungssensorik, die sich in den Seitenteilen des Fahrzeugs befindet. Diese Beschleunigungssensorik ist über eine Punkt-zu-Punkt- oder eine Bus-Verbindung mit dem Airbagsteuergerät ABECU verbunden. Dabei kann insbesondere eine Stromschnittstelle zur Anwendung kommen, bei der die Beschleunigungssensorik PAS ihre Messdaten in einem vorbestimmten Protokoll auf einen Strom, beispielsweise in einem Manchesterprotokoll, aufmoduliert. Über einen Gleichstrom über diese Übertragungsleitung wird die Beschleunigungssensorik PAS bereits auch mit Energie versorgt. Die Beschleunigungssensorik PAS ist dabei an die Schnittstelle IF1 im Airbagsteuergerät ABECU angeschlossen. Die Schnittstelle IF1 ist dabei beispielsweise Teil eines sogenannten Systemasics, also eines integrierten Schaltkreises, der verschiedenste Funktionen für das Steuergerät beherbergt. Vorliegend sind lediglich die Funktionen und Bausteine dargestellt, die für das Verständnis der Erfindung notwendig sind. Weitere für den Betrieb notwendige Komponenten sind der Einfachheit halber weggelassen worden.

Die Schnittstelle IF1 formatiert die von der Beschleunigungssensorik PAS empfangenen Daten in ein Format für den Mikrocontroller µC um, beispielsweise unter Benutzung der sogenannten SPI-(Serial Peripherial Interface) Schnittstelle, um über diesen SPI-Bus diese Daten dann einem Mikrocontroller µC zu übertragen. Im Steuergerät ABECU ist auch eine Beschleunigungssensorik BS als zentrale Beschleunigungssensorik vorgesehen, die insbesondere im Wesentlichen in Fahrzeuglängsrichtung empfindlich ist Diese Beschleunigungssensorik liefert beispielsweise digital ihre Daten an den Mikrocontroller µC. Auch eine analoge Anbindung ist möglich.

Im Mikrocontroller µC ist eine Schnittstelle IF2 als Softwaremodul vorhanden, um die Signale der Beschleunigungssensorik BS zu empfangen und an die weiteren Softwaremodule weiterzuleiten.

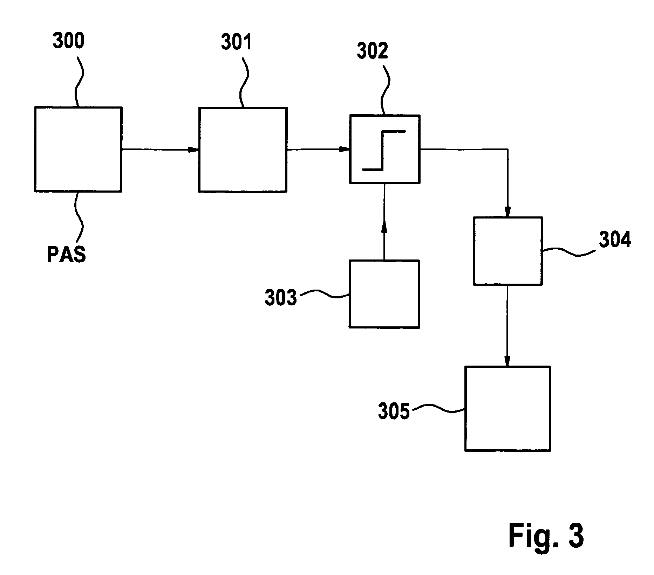

Ein Bewertungsmodul BM als weiteres Softwaremodul erhält die Signale von den Schnittstellen IF1 und IF2, um den Crashtyp in der erfindungsgemäßen Weise zu bestimmen. Dies wird weiter unten anhand der Figuren 2 und 3 erläutert Insbesondere wird damit beim Frontcrash der ODB-Crash vom AZT-Crash unterschieden.

Der so bestimmte Crashtyp wird im Ansteuerungsmodul AM übertragen, das ein Ansteuerungssignal erzeugt, was über die Schnittstelle IF3 im Mikrocontroller µC an die Ansteuerschaltung FLIC, beispielsweise auch über den SPI-Bus, übertragen wird. Die Ansteuerschaltung FLIC mit einer Auswertelogik für das Ansteuersignal und den entsprechenden elektrisch steuerbaren Leistungsschaltern zur Bestromung von beispielsweise Zündelementen für Airbags oder Gurtstraffern, besorgt dann die Aktivierung bzw. Ansteuerung der Personenschutzmittel PS in der im Ansteuersignal vorbestimmten Weise.

Es können im Mikrocontroller µC noch weitere Softwaremodule vorhanden sein, insbesondere ein weiterer Ansteueralgorithmus, in den dann als Eingangsparameter der durch das Modul BM bestimmte Crashtyp eingeht. Dieser Ansteuerungsalgorithmus verändert dann beispielsweise seine Schwelle oder Schwellen in Abhängigkeit von diesem bestimmten Crashtyp. Weitere dem Fachmann geläufige Variationen sind vorliegend möglich.

Das Airbagsteuergerät ABECU ist eine baulich geschlossene Einheit, die beispielsweise ein Metall- und/oder Kunststoffgehäuse aufweist, in dem sich die einzelnen oben beschriebenen Komponenten befinden. Es ist möglich, dass das Airbagsteuergerät ABECU völlig ohne Sensorik ausgeführt ist und die Beschleunigungssensorik BS dann beispielsweise auf einem Sensorsteuergerät oder allein zentral im Fahrzeug eingebaut ist. Das Airbagsteuergerät ABECU kann dann an einer geeigneten Stelle im Fahrzeug angeordnet sein. Neben den hier beschriebenen Sensoren können auch noch weitere Unfallsensoren verwendet werden, um insbesondere den Ansteuerungsalgorithmus mit entsprechenden Eingangsgrößen zu versehen.

Figur 2 zeigt in einem Flussdiagramm das erfindungsgemäße Verfahren. In Verfahrensschritt 200 wird das erste Signal von der Zentralsensorik BS und das zweite Signal von der zweiten Beschleunigungssensorik PAS bereitgestellt. Im Verfahrensschritt 201 wird dann anhand des Zentralsignals, beispielsweise auch anhand der seit Crashbeginn abgelaufenen Zeit entschieden, ob eine Größe ausgegeben wird, die das Weiterverarbeiten des zweiten Signals, d. h. der zweiten Beschleunigungssensorik bedingt. Dies wird dann in Verfahrensschritt 202 geprüft. Wurde anhand des Zentralsignals festgestellt, dass eine Weiterverarbeitung nicht mehr angezeigt ist, wird zu Verfahrensschritt 200 zurückgesprungen. Wurde jedoch in Verfahrensschritt 202 festgestellt, dass eine Weiterverarbeitung auf das zweite Signal angezeigt ist, dann wird zu Verfahrensschritt 203 gesprungen. In Verfahrensschritt 203 wird dann anhand einer Schwellwertabfrage des zweiten Signals, also der zweiten Beschleunigungssensorik, festgestellt, welcher Crashtyp vorliegt, ein ODB- oder ein AZT-Crash. Die Schwelle kann in Abhängigkeit vom ersten Signal und/oder der Zeit verändert werden. Der so ermittelte Crashtyp wird in Verfahrensschritt 204 dann dazu genutzt, ein entsprechendes Ansteuersignal zu erzeugen.

Figur 3 zeigt ein weiteres Flussdiagramm des erfindungsgemäßen Verfahrens. Im Verfahrensschritt 300 wird das zweite Signal der Beschleunigungssensorik im Seitenbereich des Fahrzeugs bereitgestellt. Dies wird in Verfahrensschritt 301 einer Vorverarbeitung unterzogen, die beispielsweise auch schon sensorseitig erfolgen kann. Diese Vorverarbeitung kann entweder die Ermittlung des Wechselanteils des Messsignals, oder des tieffrequenten Anteils sein. Das so entstandene zweite Signal wird dann in Verfahrensschritt 302 einem Schwellwertvergleich unterzogen, wobei die Schwelle in Abhängigkeit von Verfahrensschritt 303 und damit in Abhängigkeit vom Zentralsignal verändert werden kann. Anhand des Ergebnisses des Schwellwertvergleichs aus Verfahrensschritt 302 kann in Verfahrensschritt 304 dann der Crashtyp bestimmt werden. Dieser Crashtyp wird dann in Verfahrensschritt 305 einem weiteren Ansteuerungsalgorithmus als add on oder als Multiplikator für dessen Schwelle zur Verfügung gestellt. Dieser Algorithmus bestimmt dann, ob und welche Personenschutzmittel wie angesteuert werden müssen.

## Patentansprüche

1. Verfahren zur Ansteuerung von Personenschutzmitteln (PS) für ein Fahrzeug mit folgenden Verfahrensschritten:
- Bestimmen eines Crashtyps in Abhängigkeit von einem ersten Signal einer zentral angeordneten ersten Beschleunigungssensorik (BS) und von einem zweiten Signal einer im Seitenbereich des Fahrzeugs angeordneten zweiten Beschleunigungssensorik (PAS), das zweite Signal ein Wechselanteil eines Messsignals der zweiten Beschleunigungssensorik (PAS) ist; und
- Ansteuern der Personenschutzmittel (PS) in Abhängigkeit vom Crashtyp, **dadurch gekennzeichnet, dass** als das zweite Signal eine Amplitude des Wechselanteils verwendet wird, wobei in Abhängigkeit von einem Schwellwertvergleich mit dieser Amplitude zwischen einem Crashtyp unterschieden wird.

2. Verfahren nach Anspruch 1, **dadurch gekennzeichnet, dass** die zweite Beschleunigungssensorik im Wesentlichen in Fahrzeugquerrichtung und die erste Beschleunigungssensorik in Fahrzeuglängsrichtung empfindlich ist.

3. Verfahren nach einem der Ansprüche 1 oder 2, **dadurch gekennzeichnet, dass** in Abhängigkeit von einem Schwellwertvergleich mit dieser Amplitude zwischen einem Offset-Deformable-Barrier- (ODB) und einem Allianz-Zentrum-für-Technik (AZT)-Crashtyp unterschieden wird.

4. Verfahren nach einem der Ansprüche 1 bis 3, **dadurch gekennzeichnet, dass** ein Betrag oder eine Potenz der Amplitude dem Schwellwertvergleich unterzogen wird.

5. Verfahren nach einem der Ansprüche 1 bis 4, **dadurch gekennzeichnet, dass** eine Schwelle für den Schwellwertvergleich in Abhängigkeit von dem ersten Signal oder einer Zeit ab Crashbeginn verändert wird.

6. Verfahren nach einem der vorhergehenden Ansprüche, **dadurch gekennzeichnet, dass** der bestimmte Crashtyp als eine Eingangsgröße in einem

7. Ansteuerungsalgorithmus eingeht, wobei in den Ansteuerungsalgorithmus noch weitere Crashgrößen eingehen, um die Ansteuerung zu entscheiden.

8. Steuergerät (SG) zur Ansteuerung von Personenschutzmitteln (PS) für ein Fahrzeug mit:
- einer ersten Schnittstelle (IF1) zur Bereitstellung eines ersten Signals einer zentral angeordneten ersten Beschleunigungssensorik (BS);
- einer zweiten Schnittstelle (IF2) zur Bereitstellung eines zweiten Signals einem Seitenbereich des Fahrzeugs angeordneten zweiten Beschleunigungssensorik (PAS), das zweite Signal ein Wechselanteils eines Messsignals der zweiten Beschleunigungssensorik (PAS) ist, wobei als das zweite Signal eine Amplitude des Wechselanteils verwendet wird;
- einer Auswerteschaltung (µC) für ein Bestimmungsmodul (WM) zur Bestimmung eines Crashtyps in Abhängigkeit vom ersten und vom zweiten Signal und einem Ansteuerungsmodul (AM) zur Erzeugung eines Ansteuerungssignals in Abhängigkeit vom Crashtyp, wobei in Abhängigkeit von einem Schwellwertvergleich mit dieser Amplitude zwischen einem Crashtyp unterschieden wird; und
- einer Ansteuerungsschaltung (FLIC) zum Ansteuern der Personenschutzmittel (PS) in Abhängigkeit vom Ansteuerungssignal.

## Claims

1. Method for actuating personal protection means (PS) for a vehicle, having the following method steps of:
- determining a type of crash on the basis of a first signal from a centrally arranged first acceleration sensor system (BS) and a second signal from a second acceleration sensor system (PAS) arranged in the side area of the vehicle, the second signal being an alternating component of a measurement signal from the second acceleration sensor system (PAS); and
- actuating the personal protection means (PS) on the basis of the type of crash, **characterized in that** an amplitude of the alternating component is used as the second signal, a type of crash being distinguished on the basis of a threshold value comparison with this amplitude.

2. Method according to Claim 1, **characterized in that** the second acceleration sensor system is sensitive substantially in the transverse direction of the vehicle and the first acceleration sensor system is sensitive in the longitudinal direction of the vehicle.

3. Method according to either of Claims 1 and 2, **characterized in that** a distinction is made between an offset deformable barrier (ODB) type of crash and an Allianz Zentrum fur Technik (AZT) type of crash on the basis of a threshold value comparison with this amplitude.

4. Method according to one of Claims 1 to 3, **characterized in that** a magnitude or a power of the amplitude is subjected to the threshold value comparison.

5. Method according to one of Claims 1 to 4, **characterized in that** a threshold for the threshold value comparison is changed on the basis of the first signal or a time from the start of the crash.

6. Method according to one of the preceding claims, **characterized in that** the determined type of crash is included as an input variable in an

7. actuation algorithm, yet further crash variables being included in the actuation algorithm in order to decide on the actuation.

8. Control device (SG) for actuating personal protection means (PS) for a vehicle, having:
- a first interface (IF1) for providing a first signal from a centrally arranged first acceleration sensor system (BS);
- a second interface (IF2) for providing a second signal from a second acceleration sensor system (PAS) arranged in the side area of the vehicle, the second signal being an alternating component of a measurement signal from the second acceleration sensor system (PAS), an amplitude of the alternating component being used as the second signal;
- an evaluation circuit (µC) for a determination module (WM) for determining a type of crash on the basis of the first and second signals and an actuation module (AM) for generating an actuation signal on the basis of the type of crash, a type of crash being distinguished on the basis of a threshold value comparison with this amplitude; and
- an actuation circuit (FLIC) for actuating the personal protection means (PS) on the basis of the actuation signal.

## Revendications

1. Procédé destiné à amorcer des moyens de protection de personnes (PS) pour un véhicule, comportant les étapes de procédé suivantes :
- détermination d'un type de collision en fonction d'un premier signal d'un premier dispositif de détection d'une accélération (BS) placé de manière centralisée et d'un deuxième signal d'un deuxième dispositif de détection d'une accélération (PAS) placé dans la région latérale du véhicule, le deuxième signal étant une composante alternative d'un signal de mesure du deuxième dispositif de détection d'une accélération (PAS) ; et
- amorçage des moyens de protection de personnes (PS), en fonction du type de collision,
**caractérisé en ce qu'**en tant que deuxième signal, il est utilisé une amplitude de la composante alternative, alors qu'en fonction d'une comparaison de valeurs seuils avec cette amplitude, il est différencié un type de collision.

2. Procédé selon la revendication 1, **caractérisé en ce que** le deuxième dispositif de détection d'une accélération est sensible majoritairement dans la direction transversale du véhicule et le premier dispositif de détection d'une accélération est sensible majoritairement dans la direction longitudinale du véhicule.

3. Procédé selon l'une quelconque des revendications 1 ou 2, **caractérisé en ce qu'**en fonction d'une comparaison de valeurs seuils avec cette amplitude, il est différencié entre un type de collision ODB (Offset Deformable Barrier) et un type de collision AZT (Allianz Zentrum für Technik).

4. Procédé selon l'une quelconque des revendications 1 à 3, **caractérisé en ce qu'**un montant ou une puissance de l'amplitude est soumis(e) à la comparaison des valeurs seuils.

5. Procédé selon l'une quelconque des revendications 1 à 4, **caractérisé en ce qu'**un seuil pour la comparaison de valeurs seuils est modifié en fonction du premier signal ou d'une durée à partir du début de la collision.

6. Procédé selon l'une quelconque des revendications précédentes, **caractérisé en ce que** le type de collision déterminé intervient dans un

7. algorithme d'amorçage, d'autres grandeurs de la collision intervenant encore dans l'algorithme d'amorçage pour décider de l'amorçage.

8. Instrument de commande (SG) pour l'amorçage de moyens de protection de personnes (PS) pour un véhicule, comportant :
- une première interface (IF1) pour la mise à disposition d'un premier signal d'un premier dispositif de détection d'une accélération (BS) placé de manière centralisée ;
- une deuxième interface (IF2) pour la mise à disposition d'un deuxième signal d'un deuxième dispositif de détection d'une accélération (PAS) placé dans la région latérale du véhicule, le deuxième signal étant une composante alternative d'un signal de mesure du deuxième dispositif de détection d'une accélération (PAS), en tant que deuxième signal, étant utilisée une amplitude de la composante alternative ;
- un circuit d'évaluation (µC) pour un module de détermination (WM) destiné à déterminer un type de collision en fonction du premier signal et du deuxième signal et d'un module d'amorçage (AM) destiné à générer un signal d'amorçage en fonction du type de collision, sachant qu'en fonction d'une comparaison de valeurs seuils avec cette amplitude, il est différencié un type de collision ; et
- un circuit d'amorçage (FLIC) pour amorcer les moyens de protection de personnes (PS), en fonction du signal d'amorçage.
